# EUROPÄISCHE PATENTSCHRIFT

(11) **EP 2 492 152 B1**
(45) Veröffentlichungstag und Bekanntmachung des Hinweises auf die Patenterteilung: **19.03.2014**
(21) Anmeldenummer: 12400003.5
(22) Anmeldetag: 18.01.2012
(51) Int. Cl.: B60R 21/0136, B60R 21/0134, B60R 21/01

(54) **Kraftfahrzeug**
Motor vehicle
Véhicule automobile

(30) Priorität: 23.02.2011 DE 102011012081
(43) Veröffentlichungstag der Anmeldung: 29.08.2012
(73) Patentinhaber: Audi AG, 85045 Ingolstadt (DE)
(72) Erfinder: Fürst, Franz, 85114 Buxheim (DE); Larice, Markus, 85123 Karlskron (DE); Dirndorfer, Tobias, 80799 München (DE)
(74) Vertreter: Thielmann, Frank

(56) Entgegenhaltungen:
- DE-A1- 10 065 518
- DE-A1- 10 234 624
- DE-A1- 10 247 670
- DE-A1- 10 323 483
- DE-A1- 19 724 101
- DE-A1-102005 035 415

## Beschreibung

Die Erfindung betrifft ein Kraftfahrzeug nach dem Oberbegriff des Anspruchs 1.

Bekanntermaßen verfügen moderne Kraftfahrzeuge über verschiedenartige Rückhaltevorrichtungen, welche den Fahrzeuginsassen im Falle einer Kollision des Fahrzeugs mit einem bewegten oder unbewegten Kollisionsobjekt wie etwa einem anderen Fahrzeug oder einem Bauwerk vor Verletzungen schützen. Hierfür ist in dem jeweiligen Fahrzeug üblicherweise eine standardmäßige Ansteuerinformation für die entsprechenden Rückhaltevorrichtungen vorgesehen, gemäß welcher im Falle einer über eine fahrzeugseitige Kollisionserfassungseinrichtung erfassten Kollision eine Ansteuerung der Rückhaltevorrichtungen vorgenommen wird. Dabei beruht die standardmäßige Ansteuerinformation respektive die Auslegung bzw. Auslösung heutiger Rückhaltevorrichtungen, wie beispielsweise Gurtstraffern und/oder Airbags im Wesentlichen auf der Annahme schwerwiegender Kollisionen.

Demgegenüber schlägt DE 197 24 101 A1 ein Verfahren zur bedarfsgerechten Steuerung von Insassensicherheitseinrichtungen vor. Dabei wird über eine Precrash-Sensorik vor der Kollision des Fahrzeugs mit einem Kollisionsobjekt für die bevorstehende Kollision ein voraussichtlicher Fahrzeugbeschleunigungsverlauf aus einer Menge an in einer Datenbank hinterlegten Beschleunigungsverläufen ermittelt und im Falle der Kollision mit einem während der Kollision tatsächlich gemessenen Fahrzeugbeschleunigungsverlauf verglichen, woraufhin ein bestimmter Auslösezeitpunkt einer Insassensicherheitseinrichtung gewählt wird. Ergibt es sich, dass der voraussichtliche Fahrzeugbeschleunigungsverlauf mit dem tatsächlich gemessenen Fahrzeugbeschleunigungsverlauf nicht übereinstimmt, wird der erwartete Fahrzeugbeschleunigungsverlauf korrigiert und der Auslösezeitpunkt der Insassensicherheitseinrichtung entsprechend des korrigierten erwarteten Fahrzeugbeschleunigungsverlaufs angepasst.

Die Lehre gemäß DE 197 24 101 A1 offenbart also ein rückschauendes Prinzip, da dort erst während der Kollision gegebenenfalls unter mehrmaliger Korrektur festgelegt wird, welche Insassensicherheitseinrichtungen wann und wie angesteuert werden. Das Verfahren ist als aufwendig, zeitintensiv und angesichts der kurzen Dauer einer Kollision nicht zufriedenstellend zu erachten.

Der vorliegenden Erfindung liegt daher das Problem zugrunde, ein, insbesondere hinsichtlich einer situationsgerechten Ansteuerinformation wenigstens einer Rückhaltevorrichtung, verbessertes Kraftfahrzeug anzugeben.

Zur Lösung des Problems ist bei einem Kraftfahrzeug der eingangs genannten Art erfindungsgemäß vorgesehen, dass die Steuereinrichtung der wenigstens einen Rückhaltevorrichtung bei einem keine Validierung der wenigstens einen ersten Kollisionsinformation bezüglich der zweiten Kollisionsinformation anzeigenden Vergleichsergebnis zur Auswahl einer standardmäßigen Ansteuerinformation der wenigstens einen Rückhaltevorrichtung und zu einer der standardmäßigen Ansteuerinformation entsprechenden Ansteuerung der wenigstens einen Rückhaltevorrichtung ausgebildet ist.

Die vorliegende Erfindung bietet im Falle einer Kollision des Fahrzeugs mit wenigstens einem Kollisionsobjekt die Möglichkeit einer situationsgerechten, d. h. an das Ausmaß bzw. den Schweregrad des jeweiligen Kollisionsvorgangs angepassten Ansteuerung der wenigstens einen Rückhaltevorrichtung. Wesentlich ist dabei das über die Vergleichseinrichtung erstellte Vergleichsergebnis zwischen der ersten Kollisionsinformation und der zweiten Kollisionsinformation, welches ein Maß dafür darstellt, wie genau die tatsächliche Kollision vorab durch die erste Kollisionsinformation abgebildet bzw. prognostiziert wurde. Hierbei sind grundsätzlich zwei Fälle denkbar.

Im ersten Fall gibt das Vergleichsergebnis einen hohen Grad an Übereinstimmung zwischen der ersten Kollisionsinformation und der zweiten Kollisionsinformation an, d. h. der durch die zweite Kollisionsinformation abgebildete tatsächliche Kollisionsverlauf wurde durch die erste Kollisionsinformation hinreichend genau beschrieben bzw. prognostiziert. In diesem Fall liegt eine Validierung bzw. Bestätigung der ersten Kollisionsinformation durch die zweite Kollisionsinformation vor, woraufhin von der Steuereinrichtung der wenigstens einen Rückhaltevorrichtung eine der tatsächlichen Kollision angepasste Ansteuerinformation aus der eine Vielzahl an für unterschiedliche Kollisionsvorgänge individuell definierten Ansteuerinformationen zum Ansteuern der wenigstens einen Rückhaltevorrichtung enthaltenden Speichereinrichtung ausgewählt und in eine entsprechende Ansteuerung der wenigstens einen Rückhaltevorrichtung umgesetzt wird.

Im zweiten Fall gibt das Vergleichsergebnis einen geringen Grad an Übereinstimmung bzw. im Extremfall keine Übereinstimmung zwischen der ersten Kollisionsinformation und der zweiten Kollisionsinformation an, d. h. der durch die zweite Kollisionsinformation abgebildete tatsächliche Kollisionsverlauf wurde durch die erste Kollisionsinformation nicht hinreichend genau bzw. im Extremfall gar nicht beschrieben bzw. prognostiziert. In diesem Fall liegt keine Validierung bzw. Bestätigung der ersten Kollisionsinformation durch die zweite Kollisionsinformation vor, woraufhin die Steuereinrichtung der wenigstens einen Rückhaltevorrichtung der Speichereinrichtung keine für unterschiedliche Kollisionsvorgänge individuell definierte Ansteuerdefinition entnimmt, sondern auf eine standardmäßige Ansteuerinformation der wenigstens einen Rückhaltevorrichtung zurückgreift und diese in eine entsprechende Ansteuerung der wenigstens einen Rückhaltevorrichtung umsetzt. Die standardmäßige Ansteuerinformation ist in der Regel für eine besonders schwerwiegende Kollision ausgelegt.

Durch das einfach ermittelbare und auswertbare Vergleichsergebnis zwischen der ersten Kollisionsinformation und der zweiten Kollisionsinformation ist in kurzer Zeit festlegbar, welche Strategie zur Ansteuerung der wenigstens einen Rückhaltevorrichtung im Falle der tatsächlichen Kollision verfolgt wird. Im oben genannten ersten Fall kann auf eine individuell festgelegte, an den tatsächlichen Kollisionsverlauf angepasste Ansteuerinformation zurückgegriffen werden, diese basiert beispielsweise auf Modellen zu unterschiedlichen Kollisionsvorgängen. Im oben genannten zweiten Fall wird auf eine standardmäßige Ansteuerinformation zurückgegriffen. Aufwendige und zeitintensive Rechenvorgänge bzw. eine Anpassung vorgegebener Ansteuerinformationen an den tatsächlichen Kollisionsverlauf sind erfindungsgemäß nicht notwendig.

Ab welchem Grad eine Übereinstimmung zwischen der ersten Kollisionsinformation und der zweiten Kollisionsinformation von einer Validierung der ersten Kollisionsinformation durch die zweite Kollisionsinformation ausgegangen werden kann, ist grundsätzlich werksseitig festzulegen und kann für verschiedene Fahrzeuge unterschiedlich sein, so dass in Abhängigkeit insbesondere von fahrzeugspezifischen und/oder fahrdynamischen Parametern unterschiedliche Grenzwerte bzw. Grenzbereiche, ab denen von einer Validierung die Rede ist, vorgegeben sein können.

Die erste Kollisionsinformation beinhaltet beispielsweise die voraussichtliche Fahrzeugverzögerung bei einer bevorstehenden Kollision des Fahrzeugs mit einem Kollisionsobjekt sowie eine ein Maß für den voraussichtlichen Grad der Deformation des Fahrzeugs bei der bevorstehenden Kollision darstellende Information. Grundsätzlich betrifft die erste Kollisionsinformation sämtliche bezüglich der bevorstehenden Kollision des Fahrzeugs mit einem Kollisionsobjekt relevanten Informationen, worauf später näher eingegangen wird. Es kann sich dabei um eine Art Korridor für den zu erwartenden Kollisionsverlauf handeln, mithin also eine bereichsweise Abschätzung bestimmter Parameter für den zu erwartenden Kollisionsverlauf.

Die zweite Kollisionsinformation beinhaltet beispielsweise die tatsächliche Fahrverzögerung während der Kollision des Fahrzeugs mit dem Kollisionsobjekt sowie eine ein Maß für den tatsächlichen Grad der Deformation des Fahrzeugs während der Kollision darstellende Deformationsinformation. Sonach betrifft die zweite Kollisionsinformation grundsätzlich sämtliche bezüglich der tatsächlichen Kollision relevanten Informationen. Hierunter fallen beispielsweise sowohl das eigene Fahrzeug als auch das Kollisionsobjekt betreffende Beschleunigungswerte, Deformationswerte etc., welche sich aus physikalischen und/oder mechanischen und/oder geometrischen Parametern des Fahrzeugs, des Kollisionsobjekts sowie des Kollisionsverlaufs wie etwa Massen, Steifigkeiten, Geschwindigkeiten, geometrische Abmessung, insbesondere auch dem Überlappungsbereich zwischen dem Fahrzeug und dem Kollisionsobjekt während der Kollision, welcher sich insbesondere aus der Art der Kollision ergibt und sich beispielsweise bei einem Frontalaufprall anders ausbildet als bei einem Seitenaufprall, ermitteln lassen.

Es ist ebenso denkbar, dass die Recheneinrichtung mehr als eine erste Kollisionsinformation ermittelt, mithin also in einem gegebenen Fall einer bevorstehenden Kollision mehr als ein möglicher Kollisionsvorgang bzw. mehr als ein Kollisionsverlauf realistisch scheint, was insbesondere möglich ist, wenn die Art des Kollisionsobjekts nicht hinreichend genau erfassbar ist, so dass vorab beispielsweise nicht zwischen einem stehenden Fahrzeug und einem Gebäude unterschieden werden kann. Hier wird folglich eine der Anzahl der ersten Kollisionsinformationen entsprechende Anzahl an Vergleichsergebnissen ermittelt und ausgegeben, d. h. im Kollisionsfall wird jede erste Kollisionsinformation separat mit der zweiten Kollisionsinformation verglichen und jeweils ein entsprechendes Vergleichsergebnis ausgegeben. Im Weiteren wird selbstverständlich die plausiblere erste Kollisionsinformation, d. h. das Vergleichsergebnis mit der höheren Übereinstimmung zwischen der ersten Kollisionsinformation und der zweiten Kollisionsinformation als Grundlage für das weitere Vorgehen, d. h. die Auswahl einer situationsgerechten Ansteuerinformation herangezogen. Drücken sämtliche Vergleichsergebnisse aus, dass alle ersten Kollisionsinformationen durch die zweite Kollisionsinformation nicht validierbar sind, wird im Kollisionsfall die standardmäßige Ansteuerinformation verwendet. Selbstverständlich ist es denkbar, die Anzahl möglicher erster Kollisionsinformation zu begrenzen, so dass die Recheneinrichtung beispielsweise maximal drei erste Kollisionsinformation ermitteln und/oder ausgeben kann.

In einer bevorzugten Ausführungsform der Erfindung ist die Steuereinrichtung der wenigstens einen Rückhaltevorrichtung in Abhängigkeit der ersten Kollisionsinformation zu einer Vorauswahl einer Ansteuerinformation aus der Speichereinrichtung ausgebildet. Entsprechend kann durch die Vornahme einer Vorauswahl einer individuell an eine bevorstehende Kollision angepassten Ansteuerinformation die Zeit bis zur Aktivierung der wenigstens einen Rückhaltevorrichtung weiter reduziert werden, sofern das Vergleichsergebnis eine Validierung der ersten Kollisionsinformation durch die zweite Kollisionsinformation angibt. In diesem Fall ist im Weiteren nicht zwingend eine Auswahl einer an den tatsächlichen Kollisionsverlauf angepassten Ansteuerinformation vorzunehmen, sondern es kann auf die im Rahmen der Ermittlung der ersten Kollisionsinformation vorausgewählte Ansteuerinformation zurückgegriffen werden.

Ferner ist es denkbar, dass die Steuereinrichtung der wenigstens einen Rückhaltevorrichtung in Abhängigkeit des Vergleichsergebnisses gegebenenfalls zur erneuten Auswahl einer alternativen Ansteuerinformation aus der Speichereinrichtung ausgebildet ist. Mithin kann, wenn die erste Kollisionsinformation durch das Vergleichsergebnis zwar validiert wird, jedoch eine angesichts des tatsächlichen Kollisionsvorgangs andere Ansteuerinformationen situationsgerechter erscheint, die Vorauswahl aufgehoben und die entsprechend alternative Ansteuerinformation ausgewählt und umgesetzt werden.

Dahingegen kann bei keiner Validierung der ersten Kollisionsinformation durch das Vergleichsergebnis die Vorauswahl einer Ansteuerinformation aufgehoben respektive die vorab ausgewählte Ansteuerinformation verworfen und auf die standardmäßige Ansteuerinformation zurückgegriffen werden.

Vorteilhaft ist die Steuereinrichtung, wenn die wenigstens eine Recheneinrichtung keine erste Kollisionsinformation ausgeben kann, im Falle einer Kollision des Fahrzeugs mit einem Kollisionsobjekt zur Ansteuerung der wenigstens einen Rückhaltevorrichtung entsprechend der standardmäßigen Ansteuerinformation ausgebildet. Sonach wird in Fällen, in denen beispielsweise aufgrund eines Defekts der Recheneinrichtung oder eines Mangels an der Recheneinrichtung zugeführten und zur Ermittlung der ersten Kollisionsinformation notwendigen Informationen eine Ermittlung und Ausgabe einer ersten Kollisionsinformation nicht oder nur fehlerhaft möglich ist, grundsätzlich auf die standardmäßige Ansteuerinformation zurückgegriffen, welche den Fahrzeuginsassen einen zwar nicht situationsgerechten, jedoch in der Regel vollumfassenden Schutz bietet.

Wie oben kurz erläutert wurde, kann im Rahmen der Ermittlung der ersten Kollisionsinformation eine Vielzahl an Parametern berücksichtigt werden, wobei die Anzahl der berücksichtigten Parameter regelmäßig ein Indiz für die Qualität der ersten Kollisionsinformation ist. Mithin ist es zweckmäßig, wenn die wenigstens eine Recheneinrichtung im Rahmen der Ermittlung der ersten Kollisionsinformation zur Berücksichtigung wenigstens eines fahrzeugspezifischen und/oder kollisionsobjektspezifischen Parameters ausgebildet ist. Wie im Hinblick auf die zweite Kollisionsinformation erwähnt wurde, sind hierbei insbesondere physikalische und/oder mechanische und/oder geometrische Parameter des eigenen Fahrzeugs, des Kollisionsobjekts sowie des Kollisionsvorgangs von Bedeutung.

Fahrzeugspezifische und/oder objektspezifische Parameter können beispielsweise die Masse des Fahrzeugs und/oder die Steifigkeit des Fahrzeugs und/oder die Geschwindigkeit des Fahrzeugs und/oder die Masse des Kollisionsobjekts und/oder die Steifigkeit des Kollisionsobjekts und/oder die Geschwindigkeit des Kollisionsobjekts und/oder die Relativgeschwindigkeit zwischen Fahrzeug und Kollisionsobjekt und/oder der Abstand zwischen Fahrzeug und Kollisionsobjekt und/oder Beschleunigungs- und/oder Verzögerungswerte des Fahrzeugs und/oder des Kollisionsobjekts sein. Physikalische wie insbesondere auch mechanische Parameter des Kollisionsobjekts können im Rahmen einer über eine geeignete Sensorik ausführbaren Objekterkennung unter Rückgriff auf eine eine Vielzahl an unterschiedlichen Kollisionsobjekten enthaltenden Speichereinrichtung ermittelt werden. Beispielsweise kann ein bestimmter Fahrzeugtyp erkannt und diesem zugeordnete physikalische und/oder mechanische und/oder geometrische Kennwerte herangezogen werden. Gleiches gilt auch für statische Kollisionsobjekte wie Bauwerke, wobei gegebenenfalls ein Rückgriff der wenigstens einen Recheneinrichtung auf Daten einer Navigationseinrichtung erfolgen kann, so dass in Abhängigkeit der aktuellen Position des Fahrzeugs eine Information darüber erhalten werden kann, welche Bauwerke in einem bestimmten Umfeld um das Fahrzeug vorhanden sind. Die vorgenannte Aufzählung ist keinesfalls abschließend.

Es ist ebenso denkbar, dass die wenigstens eine Recheneinrichtung im Rahmen der Ermittlung der ersten Kollisionsinformation zur Berücksichtigung wenigstens eines fahrzeuginsassenspezifischen Parameters ausgebildet ist. Insofern können auch fahrzeuginsassenspezifische Parameter in die Ermittlung der ersten Kollisionsinformation eingehen, was deren Aussagekraft weiter erhöht.

Fahrzeuginsassenspezifische Parameter können beispielsweise die Sitzbelegung eines Fahrzeuginsassen und/oder das Gewicht eines Fahrzeuginsassen und/oder ein die Körperform wenigstens eines Fahrzeuginsassen darstellendes Modell sein. Selbstverständlich umfasst das erfindungsgemäße Kraftfahrzeug hierfür entsprechende, insbesondere den Innenraum des Fahrzeugs überwachende Sensoriken wie Kameras, Gewichtssensoren, Gurtschlosssensoren oder dergleichen, die eine Ermittlung und gegebenenfalls Zuordnung von im Fahrzeuginnenraum vorhandenen Fahrzeuginsassen sowie gegebenenfalls deren körperlicher Abmessungen und Massen zulassen.

Es ist ferner zweckmäßig, wenn die wenigstens eine Recheneinrichtung zur Kommunikation mit wenigstens einer, insbesondere als Fahrzeugsensorik ausgebildeten, Umgebungserfassungseinrichtung ausgebildet ist und im Rahmen der Ermittlung der ersten Kollisionsinformation zur Berücksichtigung von von der Umgebungserfassungseinrichtung gelieferten Erfassungsdaten ausgebildet ist. Hierdurch ist die Qualität der ersten Kollisionsinformation, d. h. der damit verbundenen Prognose einer bevorstehenden Kollision des Fahrzeugs mit einem Kollisionsobjekt ebenso steigerbar. Die insbesondere als Fahrzeugsensorik ausgebildete Umgebungserfassungseinrichtung kann beispielsweise Radarsensoren, Ultraschallsensoren, Lasersensoren, Kameras etc. umfassen.

Die Vergleichseinrichtung kann zum kontinuierlichen oder intermittierenden Vergleichen der ersten Kollisionsinformation mit der zweiten Kollisionsinformation und zur Ausgabe eines entsprechenden individuellen Vergleichsergebnisses für jeden Vergleich ausgebildet sein. Mithin ist es möglich, dass die Vergleichseinrichtung gegebenenfalls mehrmals einen Vergleich zwischen der ersten Kollisionsinformation und der zweiten Kollisionsinformation anstellt und entsprechend mehrere Vergleichsergebnisse ermittelt und ausgibt, was beispielsweise im Hinblick auf eine Überprüfung eines ersten ermittelten Vergleichsergebnisses vorteilhaft sein kann. Gleichermaßen ist nicht allein unmittelbar zu Beginn der Kollision ein Vergleichsergebnis erstellbar und eine entsprechende Ansteuerinformation aus der Speichereinrichtung auswählbar und umsetzbar, vielmehr kann auch zu mehreren Zeitpunkten während der Kollision selbst ein Anpassen der gewählten Ansteuerinformation vorteilhaft sein, wenn beispielsweise zunächst kein Airbag gezündet wird, es sich im Verlauf der Kollision aber ergibt, dass dieser doch notwendig ist, da sich beispielsweise der Kollisionsverlauf geändert hat.

Die Rückhaltevorrichtung kann beispielsweise ein Gurtstraffer und/oder Gurtkraftbegrenzer und/oder Airbag und/oder eine Steifigkeitssteuerung einer Fahrgastzelle und/oder eine adaptive Kopfstütze und/oder eine Vorrichtung zur Einstellung einer Sitzposition eines Sitzes sein. Diese Aufzählung ist nicht abschließend.

Daneben betrifft die Erfindung ein Verfahren zur Ansteuerung wenigstens einer über wenigstens eine Steuereinrichtung ansteuerbaren Rückhaltevorrichtung eines Kraftfahrzeugs nach dem Oberbegriff des Anspruchs 14. Das erfindungsgemäße Verfahren zeichnet sich dadurch aus, dass die Steuereinrichtung der wenigstens einen Rückhaltevorrichtung bei einem keine Validierung der wenigstens einen ersten Kollisionsinformation bezüglich der zweiten Kollisionsinformation anzeigenden Vergleichsergebnis eine standardmäßige Ansteuerinformation der wenigstens einen Rückhaltevorrichtung auswählt und die wenigstens eine Rückhaltevorrichtung entsprechend der standardmäßigen Ansteuerinformation ansteuert.

Das erfindungsgemäße Verfahren ermöglicht eine situationsgerechte Ansteuerung der wenigstens einen Rückhaltevorrichtung im Falle einer Kollision des Fahrzeugs mit dem Kollisionsobjekt, welche insbesondere auf dem Vergleich der einen voraussichtlichen Kollisionsvorgang prognostizierenden ersten Kollisionsinformation und der den tatsächlichen Kollisionsvorgang abbildenden zweiten Kollisionsinformation basiert, welcher sich durch das von der Vergleichseinrichtung ermittelte Vergleichsergebnis beschreiben lässt.

Hierbei kann das Vergleichsergebnis entweder eine Validierung bzw. Bestätigung der ersten Kollisionsinformation durch die zweite Kollisionsinformation angeben, d.h. dass der Kollisionsvorgang im Rahmen der Ermittlung des ersten Kollisionsinformation hinreichend genau prognostiziert werden konnte, oder keine Validierung bzw. keine Bestätigung der ersten Kollisionsinformation durch die zweite Kollisionsinformation angeben, d.h. dass der Kollisionsvorgang im Rahmen der Ermittlung der ersten Kollisionsinformation nicht hinreichend genau prognostiziert werden konnte.

Im ersten Fall, d.h. bei Validierung wird eine bezogen auf den tatsächlichen Kollisionsvorgang situationsgerechte Ansteuerinformation der wenigstens einen Rückhaltevorrichtung aus der Speichereinrichtung ausgewählt und in eine entsprechende Ansteuerung der wenigstens einen Rückhaltevorrichtung umgesetzt. Im zweiten Fall, d.h. bei Nichtvalidierung wird auf eine standardmäßige Ansteuerinformation zurückgegriffen und die wenigstens eine Rückhaltevorrichtung entsprechend angesteuert. Die standardmäßige Ansteuerinformation ist in der Regel für eine besonders schwerwiegende Kollision ausgelegt.

Wie bereits bezüglich des erfindungsgemäßen Kraftfahrzeugs ausgeführt, ist durch das einfach ermittelbare und auswertbare Vergleichsergebnis zwischen der ersten Kollisionsinformation und der zweiten Kollisionsinformation in kurzer Zeit festgelegt, welche Strategie zur Ansteuerung der wenigstens einen Rückhaltevorrichtung verfolgt wird. Aufwendige und zeitintensive Rechenvorgänge bzw. eine Anpassung vorgegebener Ansteuerinformationen an den tatsächlichen Kollisionsverlauf sind im Rahmen des erfindungsgemäßen Verfahrens nicht notwendig.

Bevorzugt wird als erste Kollisionsinformation eine Information, welche die voraussichtliche Fahrzeugverzögerung bei einer bevorstehenden Kollision des Fahrzeugs mit einem Kollisionsobjekt sowie eine ein Maß für den voraussichtlichen Grad der Deformation des Fahrzeugs bei der bevorstehenden Kollision darstellende Deformationsinformation beinhaltet, verwendet. In diesem Zusammenhang gelten im Übrigen die die erste Kollisionsinformation betreffenden Ausführungen zum erfindungsgemäßen Kraftfahrzeug.

Bevorzugt wird als zweite Kollisionsinformation eine Information, welche die tatsächliche Fahrzeugverzögerung während der Kollision des Fahrzeugs mit dem Kollisionsobjekt sowie eine ein Maß für den tatsächlichen Grad der Deformation des Fahrzeugs während der Kollision darstellenden Deformationsinformation beinhaltet, verwendet. Auch in diesem Zusammenhang gelten die die zweite Kollisionsinformation betreffenden Ausführungen zum erfindungsgemäßen Kraftfahrzeug.

Es ist zweckmäßig, wenn die Steuereinrichtung der wenigstens einen Rückhaltevorrichtung in Abhängigkeit der ersten Kollisionsinformation eine Vorauswahl einer Ansteuerinformation aus der Speichereinrichtung trifft. Durch die Vorauswahl einer gemäß der ersten Kollisionsinformation situationsgerechten Ansteuerinformation kann die Zeit bis zur Aktivierung der wenigstens einen Rückhaltevorrichtung im Wesentlichen bedingt durch einen reduzierten Rechenaufwand während der Kollision weiter verkürzt werden.

In Weiterbildung des erfindungsgemäßen Verfahrens kann die Steuereinrichtung der wenigstens einen Rückhaltevorrichtung in Abhängigkeit des Vergleichsergebnisses gegebenenfalls eine alternative Ansteuerinformation aus der Speichereinrichtung auswählen. Derart kann, wenn die erste Kollisionsinformation durch das Vergleichsergebnis zwar validiert wird, jedoch eine angesichts des tatsächlichen Kollisionsvorgangs eine andere Ansteuerinformation situationsgerechter scheint, die Vorauswahl aufgehoben und eine alternative Ansteuerinformation ausgewählt und umgesetzt werden.

Es ist ferner zweckmäßig, wenn die Steuereinrichtung, wenn die wenigstens eine Recheneinrichtung keine erste Kollisionsinformation ausgeben kann, im Falle einer Kollision des Fahrzeugs mit einem Kollisionsobjekt die wenigstens eine Rückhaltevorrichtung entsprechend der standardmäßigen Ansteuerinformation ansteuert. Insofern besteht in Fällen, in denen keine erste Kollisionsinformation ermittelbar ist, und im Weiteren auch kein Vergleichsergebnis erstellt respektive keine Auswahl einer situationsgerechten Ansteuerinformation aus der Speichereinrichtung auswählbar ist, weiterhin ein Schutz für den Fahrzeuginsassen, da im Falle einer Kollision auf die standardmäßige Ansteuerinformation zurückgegriffen wird.

Es ist analog zu den Ausführungen zu dem erfindungsgemäßen Kraftfahrzeug möglich, dass die wenigstens eine Recheneinrichtung im Rahmen der Ermittlung der ersten Kollisionsinformation wenigstens einen fahrzeugspezifischen und/oder kollisionsobjektspezifischen Parameter berücksichtigt. Derart ist die Qualität der Prognose der bevorstehenden Kollision respektive die Aussagekraft der ersten Kollisionsinformation erhöhbar.

Mit der gleichen Wirkung ist es denkbar, dass die wenigstens eine Recheneinrichtung im Rahmen der Ermittlung der ersten Kollisionsinformation wenigstens einen fahrzeuginsassenspezifischen Parameter berücksichtigt.

Als fahrzeugspezifischer und/oder objektspezifischer Parameter kann beispielsweise die Masse des Fahrzeugs und/oder die Steifigkeit des Fahrzeugs und/oder die Geschwindigkeit des Fahrzeugs und/oder die Masse des Kollisionsobjekts und/oder die Steifigkeit des Kollisionsobjekts und/oder die Geschwindigkeit des Kollisionsobjekts und/oder die Relativgeschwindigkeit zwischen Fahrzeug und Kollisionsobjekt und/oder der Abstand zwischen Fahrzeug und Kollisionsobjekt und/oder Beschleunigungs- und/oder Verzögerungswerte des Fahrzeugs und/oder des Kollisionsobjekts verwendet werden. Die Aufzählung ist nicht abschließend.

Als fahrzeuginsassenspezifischer Parameter wird vorteilhaft die Sitzbelegung eines Fahrzeuginsassen und/oder das Gewicht eines Fahrzeuginsassen und/oder ein ein die Körperform wenigstens eines Fahrzeuginsassen darstellendes Modell verwendet.

Es ist ferner zweckmäßig, wenn die wenigstens eine Recheneinrichtung mit wenigstens einer, insbesondere als Fahrzeugsensorik ausgebildeten, Umgebungserfassungseinrichtung kommuniziert und im Rahmen der Ermittlung der ersten Kollisionsinformation die von der Umgebungserfassungseinrichtung gelieferten Erfassungsdaten berücksichtigt. Auch durch die von der Umgebungserfassungseinrichtung gelieferten Informationen erhöhen die Aussagekraft der ersten Kollisionsinformation, was sich insbesondere daraus ergibt, dass diese ein genaues Abbild der Fahrzeugumgebung sowie darin befindlicher möglicher Kollisionsobjekte liefern.

In einer weiteren Ausführungsform des erfindungsgemäßen Verfahrens kann die Vergleichseinrichtung die wenigstens eine erste Kollisionsinformation mit der zweiten Kollisionsinformation kontinuierlich oder intermittierend vergleichen und für jeden Vergleich eine entsprechendes individuelles Vergleichsergebnis ausgeben. Die mehrmalige Durchführung des Vergleichs zwischen der ersten Kollisionsinformation und der zweiten Kollisionsinformation kann insofern vorteilhaft sein, dass das Vergleichsergebnis selbst überprüfbar ist, so dass gegebenenfalls, d.h. bei Veränderung des Vergleichsergebnisses eine andere Ansteuerinformation ausgewählt und entsprechend umgesetzt wird.

Im Übrigen gelten alle das erfindungsgemäße Kraftfahrzeug betreffenden Ausführungen auch für das erfindungsgemäße Verfahren.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahrzeugs;
- Fig. 2: ein Blockdiagramm zum Ablauf des erfindungsgemäßen Verfahrens; und
- Fig. 3, 4: Kraftfahrzeugdarstellungen jeweiliger im Rahmen des erfindungsgemäßen Verfahrens ermittelter erster und zweite Kollisionsinformationen.

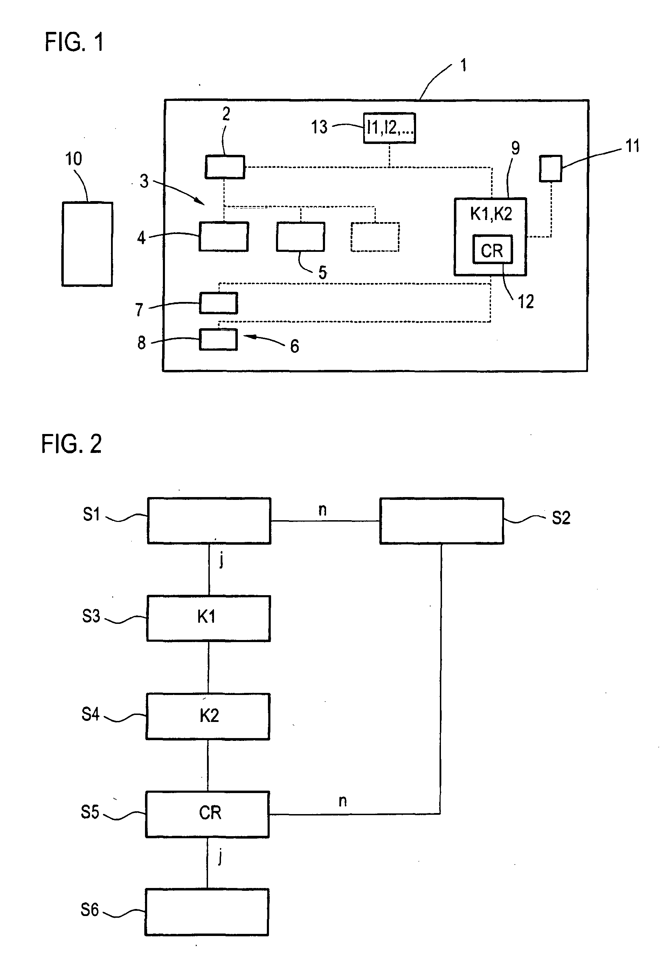

Fig. 1 zeigt eine Prinzipdarstellung eines erfindungsgemäßen Kraftfahrzeugs 1. Die Art des Antriebs des erfindungsgemäßen Kraftfahrzeugs 1 kann sowohl über einen konventionellen Verbrennungsmotor, Elektromotor oder über einen Hybrid-Antrieb erfolgen und ist für das erfindungsgemäße Prinzip nicht wesentlich. Das Kraftfahrzeug 1 umfasst mehrere über eine Steuereinrichtung 2 ansteuerbare Rückhaltevorrichtungen 3, wobei exemplarisch ein Airbag 4 und ein Gurtstraffer 5 dargestellt sind. Selbstverständlich sind in dem Kraftfahrzeug 1 in der Regel weitere Rückhaltevorrichtungen 3, wie etwa adaptive Kopfstützen, Vorrichtungen zur Einstellung der Sitzposition, weitere Airbags etc. vorhanden, wie durch den gestrichelten Kasten angedeutet ist. Sämtliche Rückhaltevorrichtungen 3 sind über entsprechende Kommunikationsleitungen netzwerkartig mit der Steuereinrichtung 2 verbunden.

Das Kraftfahrzeug 1 weist zudem eine Umgebungserfassungseinrichtung 6 auf, welche beispielsweise die Radarsensorik 7 sowie eine Kamera 8 zur Überwachung des Fahrzeugumfelds umfasst.

Ferner ist eine Recheneinrichtung 9 vorgesehen. Die Recheneinrichtung 9 ist vor einer Kollision des Kraftfahrzeugs 1 mit einem lediglich schematisch im Vorfeld des Kraftfahrzeugs 1 befindlichen Kollisionsobjekt 10 zur Ermittlung und Ausgabe wenigstens einer eine bevorstehende Kollision des Kraftfahrzeugs 1 mit dem Kollisionsobjekt 10 betreffenden ersten Kollisionsinformation K1 ausgebildet. Im Falle einer tatsächlichen Kollision des Kraftfahrzeugs 1 mit dem Kollisionsobjekt 10 kann die Recheneinrichtung 9 während der Kollision eine die tatsächliche Kollision des Kraftfahrzeugs 1 mit dem Kollisionsobjekt 10 betreffende zweite Kollisionsinformation K2 ermitteln und ausgeben. Hierfür ist in der Recheneinrichtung 9 wenigstens ein Algorithmus zur Ermittlung der Kollisionsinformationen K1, K2 hinterlegt.

Die erste Kollisionsinformation K1 beinhaltet beispielsweise die voraussichtliche Fahrzeugverzögerung in Form von ein- oder mehrdimensionalen Fahrzeugverzögerungsverläufen bei der bevorstehenden Kollision des Fahrzeugs 1 mit dem Kollisionsobjekt 10 sowie eine ein Maß für den voraussichtlichen Grad der Deformation des Fahrzeugs 1 bei der bevorstehenden Kollision darstellende Deformationsinformation. Die zweite Kollisionsinformation K2 beinhaltet beispielsweise die tatsächliche Fahrzeugverzögerung in Form von ein- oder mehrdimensionalen Fahrzeugverzögerungsverläufen während der Kollision des Fahrzeugs 1 mit dem Kollisionsobjekt 10 sowie eine ein Maß für den tatsächlichen Grad der Deformation des Fahrzeugs 1 während der Kollision darstellende Deformationsinformation. Mithin enthält die erste Kollisionsinformation K1 den voraussichtlichen Kollisionsvorgang, Kollisionsvorgang etc. prognostizierende Daten, während die zweite Kollisionsinformation K2 entsprechende tatsächliche Daten zum Kollisionsvorgang, Kollisionsverlauf etc. enthält.

Da die Recheneinrichtung 9 mit der Umgebungserfassungseinrichtung 6, d. h. der Radarsensorik 7 sowie der Kamera 8 sowie der Steuereinrichtung 2 kommuniziert, können im Rahmen der Ermittlung der ersten Kollisionsinformation K1 von der Umgebungserfassungseinrichtung 6 gelieferte Erfassungsdaten berücksichtigt werden, welche beispielsweise Aufschluss über die Art des Kollisionsobjekts 10 geben können, wonach etwa eine Unterscheidung, ob es sich bei dem Kollisionsobjekt 10 beispielsweise um ein anderes Fahrzeug, eine Person, oder ein Gebäude handelt, möglich ist. Gleichermaßen kann die Recheneinrichtung 9 zusätzlich zur Umgebungserfassungseinrichtung 6 mit weiteren Komponenten des Kraftfahrzeugs 1 kommunizierend verbunden sein, so dass die Recheneinrichtung 9 im Rahmen der Ermittlung der ersten Kollisionsinformation K1 verschiedene fahrzeugspezifische und/oder kollisionsobjektspezifische Parameter berücksichtigen kann. Hierzu zählen beispielsweise die Masse des Fahrzeugs 1 und/oder die Steifigkeit des Fahrzeugs 1 und/oder die Geschwindigkeit des Fahrzeugs 1. Auch eine Ermittlung respektive Abschätzung der Masse des Kollisionsobjekts 10 und/oder der Steifigkeit des Kollisionsobjekts 10 und/oder der Geschwindigkeit des Kollisionsobjekts 10 ist möglich. Ferner können auch die Relativgeschwindigkeit zwischen Fahrzeug 1 und Kollisionsobjekt 10 und/oder der Abstand zwischen Fahrzeug 1 und Kollisionsobjekt 10 und/oder Beschleunigungs- und/oder Verzögerungswerte des Fahrzeugs 1 und/oder des Kollisionsobjekts 10 berücksichtigt werden, so dass insgesamt verschiedenartige physikalische und/oder mechanische und/oder geometrische Parameter sowohl des Kraftfahrzeugs 1 als auch des Kollisionsobjekts 10 in die Ermittlung der ersten Kollisionsinformation K1 eingehen können, so dass sich eine möglichst genaue Aussage bzw. Prognose über die bevorstehende Kollision, d. h. insbesondere deren Verlauf bzw. deren Schwere, treffen lässt.

Daneben werden im Rahmen der Ermittlung der ersten Kollisionsinformation K1 vorteilhaft auch verschiedene Fahrzeuginsassen spezifischer Parameter berücksichtigt. Hierzu zählen insbesondere die Sitzbelegung eines Fahrzeuginsassen und/oder das Gewicht eines Fahrzeuginsassen und/oder ein die Körperform wenigstens eines Fahrzeuginsassen darstellendes Modell. Auch die Ermittlung respektive eine Abschätzung der Größe, der Sitzposition, der Sitzhaltung der Fahrzeuginsassen ist denkbar. Hierfür sind innerhalb des Kraftfahrzeugs 1 verschiedene, nicht näher gezeigte Sensoranordnungen 11 vorgesehen, welche beispielsweise als eine im Fahrzeuginnenraum überwachende Kamera, Gurtschlosssensoren etc. ausgebildet sein können. Mithin kann die erste Kollisionsinformation K1 auch ein Abbild über eine im Falle der Kollision zu erwartende Verzögerung der Fahrzeuginsassen respektive fahrzeuginsassenspezifische ein- oder mehrdimensionale Verzögerungsverläufe bzw. Abschätzungen zu erwartender Verletzungen der Fahrzeuginsassen etc. enthalten.

Das erfindungsgemäße Kraftfahrzeug 1 umfasst ferner eine insbesondere einen Teil der Recheneinrichtung 9 bildende Vergleichseinrichtung 12, welche zum Vergleich der ersten Kollisionsinformation K1 mit der zweiten Kollisionsinformation K2 und zur Ausgabe eines Vergleichsergebnisses CR ausgebildet ist.

Weiterhin ist eine Speichereinrichtung 13 vorgesehen, in welcher für unterschiedliche Kollisionsvorgänge individuell definierte Ansteuerinformationen I1, I2 etc. zum Ansteuern der Rückhaltevorrichtungen 3 hinterlegt sind. Die Ansteuerinformationen I1, I2 etc. basieren insbesondere auf Modellberechnungen respektive Simulationen verschiedener Kollisionsvorgänge bzw. Kollisionsverläufe unter Berücksichtigung verschiedener fahrzeugspezifischer und/oder objektspezifischer Parameter. Ersichtlich kommuniziert die Speichereinrichtung 13 mit der Recheneinrichtung 9 sowie mit der Steuereinrichtung 2.

Anhand von Fig. 2 soll das erfindungsgemäße Verfahren zur Ansteuerung wenigstens einer über die Steuereinrichtung 2 ansteuerbaren Rückhaltevorrichtung 3 näher erläutert werden. Gemäß Schritt S1 erfolgt bei Erfassung eines Kollisionsobjekts 10 im Fahrzeugvorfeld eine Prüfung dahingehend, ob sich etwa aus den von der Umgebungserfassungseinrichtung 6 gelieferten Sensordaten sowie weiteren fahrzeug- und/oder kollisionsobjektspezifischen Daten eine erste Kollisionsinformation K1 ermittelbar ist. Mithin erfolgt eine Überprüfung, ob eine die bevorstehende Kollision des Kraftfahrzeugs 1 mit dem Kollisionsobjekt 10 betreffende Prognose überhaupt möglich ist. In dem Verfahrensschritt S1 kann auch eine Funktionsprüfung der Recheneinrichtung 9, der Vergleichseinrichtung 12 sowie weiterer zur Durchführung des erfindungsgemäßen Verfahrens erforderlicher Komponenten des Kraftfahrzeugs 1 durchgeführt werden.

Ist eine erste Kollisionsinformation K1 nicht ermittelbar, erfolgt in Schritt S2 im Falle einer tatsächlichen Kollision des Kraftfahrzeugs 1 mit den Kollisionsobjekt 10 ein Rückgriff auf eine standardmäßige Ansteuerinformation zur Ansteuerung der Rückhaltevorrichtungen 3, welche eine standardmäßige Ansteuerung der Rückhaltevorrichtungen 3 vorsieht.

Ist eine erste Kollisionsinformation K1 grundsätzlich ermittelbar, wird diese in Schritt S3 unter Berücksichtigung der vorgenannten Parameter ermittelt und ausgegeben. Hierbei ist es denkbar, dass die Steuereinrichtung 2 in Abhängigkeit der ersten Kollisionsinformation K1 bereits eine Vorauswahl einer im Falle der tatsächlichen Kollision umzusetzenden Ansteuerinformation I1, I2 etc. trifft.

In dem folgenden Schritt S4 wird im Falle einer tatsächlichen Kollision des Kraftfahrzeugs 1 mit dem Kollisionsobjekt 10 unmittelbar zum Beginn der Kollision eine zweite Kollisionsinformation K2 ermittelt und in dem darauffolgenden Schritt S5 ein Vergleich der ersten Kollisionsinformation K1 mit der zweiten Kollisionsinformation K2, woraus ein Vergleichsergebnis CR ermittelt und ausgegeben wird.

Das gegebenenfalls intermittierend oder kontinuierlich während der Kollision ermittelte Vergleichsergebnis CR stellt ein Maß für die Qualität der durch die erste Kollisionsinformation K1 ausgedrückten Prognose der bevorstehenden Kollision dar. Demnach kann überprüft werden, ob die die bevorstehende Kollision betreffende Prognose in Form der ersten Kollisionsinformation K1 durch die zweite, den tatsächlichen Kollisionsvorgang betreffende Kollisionsinformation K2 validiert bzw. bestätigt wird.

Es ist ebenso denkbar, dass die Recheneinrichtung 9 mehr als eine erste Kollisionsinformation ermittelt, mithin also in einem gegebenen Fall einer bevorstehenden Kollision mehr als ein möglicher Kollisionsvorgang bzw. mehr als ein Kollisionsszenario realistisch scheint. Dies ist insbesondere dann möglich, wenn die Art des Kollisionsobjekts 10 nicht hinreichend genau erfassbar ist. Hier wird im Kollisionsfall jede erste Kollisionsinformation K1 separat mit der zweiten Kollisionsinformation K2 verglichen und jeweils ein entsprechendes Vergleichsergebnis CR ausgegeben. Im Weiteren wird selbstverständlich die plausibelste erste Kollisionsinformation k1, d. h. das Vergleichsergebnis CR mit der höchsten Übereinstimmung zwischen der ersten Kollisionsinformation und der zweiten Kollisionsinformation als Grundlage für die Auswahl einer situationsgerechten Ansteuerinformation herangezogen. Selbstverständlich ist es denkbar, die Anzahl möglicher erster Kollisionsinformation K1 zu begrenzen, so dass die Recheneinrichtung beispielsweise maximal drei erste Kollisionsinformation ermitteln respektive ausgeben kann.

Dementsprechend wird bei einem eine Validierung der ersten Kollisionsinformation K1 bezüglich der zweiten Kollisionsinformation K2 anzeigenden Vergleichsergebnis CR in Schritt 6 von der Steuereinrichtung 2 eine situationsgerechte Ansteuerinformation, beispielsweise die Ansteuerinformation I1 aus der Speichereinrichtung 13 gewählt und die Ansteuerung der Rückhaltevorrichtungen 3 entsprechend vorgenommen. Für den Fall einer nur leichten Kollision mit einem Kollisionsobjekt 10 kann die beispielhafte Ansteuerinformation I1 etwa vorsehen, dass der Airbag 4 nicht gezündet wird, sondern lediglich der Gurtstraffer 5 über eine geeignete Aktorik aktiviert wird. Scheint in Anbetracht des Vergleichsergebnisses CR eine Auswahl der beispielhaften Ansteuerinformation I2 zweckmäßig, weil der Schweregrad der Kollision ein bestimmtes Maß überschreitet, kann sonach basierend auf der Ansteuerinformation 12, welche eine Zündung des Airbags 4 vorsieht, ein erhöhter Schutz für die Fahrzeuginsassen erreicht werden.

Sofern im Rahmen der Ermittlung eine Vorauswahl einer Ansteuerinformation I1, I2 stattgefunden hat, kann die Steuereinrichtung 2 auf die entsprechend vorausgewählte Ansteuerinformation I1, I2, zurückgreifen und die Rückhaltevorrichtungen 3 gemäß dieser ansteuern. Sollte sich im Rahmen der Ermittlung des Vergleichsergebnisses CR ergeben, dass die Vorauswahl ungeeignet ist, kann diese selbstverständlich verworfen werden und eine alternative Ansteuerinformation aus der Speichereinrichtung 13 entnommen respektive im Weiteren umgesetzt werden.

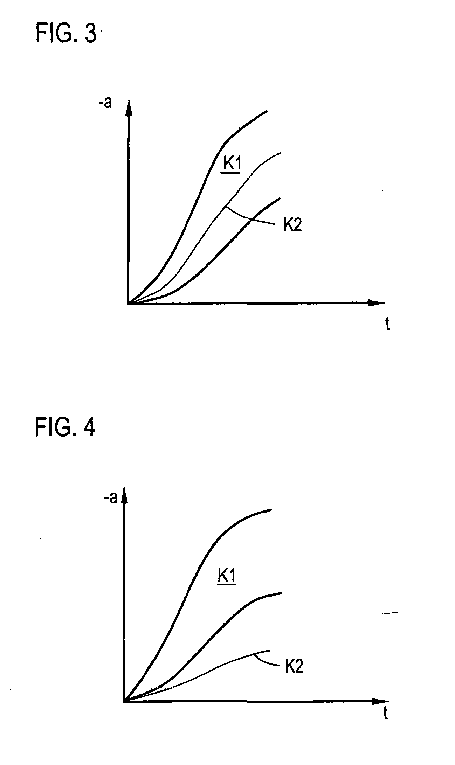

Eine beispielhafte Validierung einer ersten Kollisionsinformation K1 durch eine zweite Kollisionsinformation K2 ist in Fig. 3 zu sehen, welche einen im Vorfeld der Kollision prognostizierten Bereich respektive einen während der Kollision tatsächlich gemessenen Verlauf einer Fahrzeugbeschleunigung darstellt. Aufgetragen ist die Verzögerung -a (y-Achse) gegen die Zeit t (x-Achse). Der die erste Kollisionsinformation K1 darstellende Bereich, welcher einen prognostizierten Korridor eines oder mehrerer Fahrzeugbeschleunigungsverläufe bei der bevorstehenden Kollision bildet, wird von dem tatsächlichen Fahrzeugbeschleunigungsverlauf während der Kollision darstellenden Linie K2 durchzogen.

Denkbar ist es auch, dass die Steuereinrichtung 2 in Abhängigkeit des Vergleichsergebnisses CR gegebenenfalls eine alternative Ansteuerinformation I1, I2 aus der Speichereinrichtung auswählt. Mithin kann bei Validierung der ersten Kollisionsinformation K1 durch das Vergleichsergebnis CR noch eine Nachstellung der ausgewählten Ansteuerinformation I1, I2, möglich sein, was eine noch situationsgerechtere Ansteuerung der Rückhaltevorrichtungen 3 an die tatsächliche Kollision ermöglicht.

Gibt das Vergleichsergebnis CR indes an, dass keine Validierung der ersten Kollisionsinformation K1 bezüglich der zweiten Kollisionsinformation K2 gegeben ist, wird auf die standardmäßige Ansteuerinformation der Rückhaltevorrichtungen 3 zurückgegriffen und diese entsprechend angesteuert. Die Nichtvalidierung ist beispielhaft in dem Diagramm in Fig. 4 gezeigt. Im Gegensatz zu dem Diagramm gemäß Fig. 3 liegt die die zweite Kollisionsinformation K2 darstellende Linie außerhalb des durch die erste Kollisionsinformation K2 aufgespannten Bereichs.

Das erfindungsgemäße Kraftfahrzeug respektive das erfindungsgemäße Verfahren ermöglicht eine besonders schnelle situationsgerechte Ansteuerung der Rückhaltevorrichtungen 3, welche zudem vergleichsweise wenig rechenintensiv ist und für die Fahrzeuginsassen einen bedarfsgerechten und daher verbesserten Schutz bedeutet.

## Patentansprüche

1. Kraftfahrzeug (1), umfassend
- wenigstens eine über wenigstens eine Steuereinrichtung (2) ansteuerbare Rückhaltevorrichtung (3),
- wenigstens eine Recheneineinrichtung (9), welche
- vor einer Kollision des Fahrzeugs (1) mit einem Kollisionsobjekt (10) zur Ermittlung und Ausgabe wenigstens einer eine bevorstehende Kollision des Fahrzeugs (1) mit einem Kollisionsobjekt (10) betreffende erste Kollisionsinformation (K1) und
- während der Kollision des Fahrzeugs (1) mit dem Kollisionsobjekt (10) zur Ermittlung und Ausgabe einer die tatsächliche Kollision des Fahrzeugs (1) mit dem Kollisionsobjekt (10) betreffende zweite Kollisionsinformation (K2) ausgebildet ist, sowie
- eine Vergleichseinrichtung (12), welche zum Vergleich der ersten Kollisionsinformation (K1) mit der zweiten Kollisionsinformation (K2) und zur Ausgabe eines Vergleichsergebnisses ausgebildet ist,
wobei
die Steuereinrichtung (2) der wenigstens einen Rückhaltevorrichtung (3) bei einem eine Validierung der wenigstens einen ersten Kollisionsin-formation (K1) bezüglich der zweiten Kollisionsinformation (K2) anzeigenden Vergleichsergebnis (CR) zur Auswahl wenigstens einer in einer mit der Steuereinrichtung (2) der wenigstens einen Rückhaltevorrichtung (3) kommunizierend verbundenen Speichereinrichtung (13), in welcher für unterschiedliche Kollisionsvorgänge individuell definierte Ansteuerinformationen (I1, 12) zum Ansteuern der wenigstens einen Rückhaltevorrichtung (3) hinterlegt sind, hinterlegten Ansteuerinformation (I1, 12) und zu einer der ausgewählten Ansteuerinformation (I1, I2) entsprechenden Ansteuerung der wenigstens einen Rückhaltevorrichtung (3) ausgebildet ist,
**dadurch gekennzeichnet, dass** die Steuereinrichtung bei einem keine Validierung der wenigstens einen ersten Kollisionsinformation (K1) bezüglich der zweiten Kollisionsinformation (K2) anzeigenden Vergleichsergebnis (CR) zur Auswahl einer standardmäßigen Ansteuerinformation der wenigstens einen Rückhaltevorrichtung (3) und zu einer der standardmäßigen Ansteuerinformation entsprechenden Ansteuerung der wenigstens einen Rückhaltevorrichtung (3) ausgebildet ist.

2. Kraftfahrzeug nach Anspruch 1,
**dadurch gekennzeichnet,**
**dass** die Steuereinrichtung (2) der wenigstens einen Rückhaltevorrichtung (3) in Abhängigkeit der ersten Kollisionsinformation (K1) zu einer Vorauswahl einer Ansteuerinformation (I1, I2) aus der Speichereinrichtung (13) ausgebildet ist.

3. Kraftfahrzeug nach Anspruch 2,
**dadurch gekennzeichnet,**
**dass** die Steuereinrichtung (2) der wenigstens einen Rückhaltevorrichtung (3) in Abhängigkeit des Vergleichsergebnisses (CR) gegebenenfalls zur erneuten Auswahl einer alternativen Ansteuerinformation (I1, 12) aus der Speichereinrichtung (13) ausgebildet ist.

4. Kraftfahrzeug nach einem der vorangehenden Ansprüche,
**dadurch gekennzeichnet,**
**dass** die Steuereinrichtung, wenn die wenigstens eine Recheneinrichtung (9) keine erste Kollisionsinformation (K1) ausgeben kann, im Falle einer Kollision des Fahrzeugs (1) mit einem Kollisionsobjekt (10) zur Ansteuerung der wenigstens einen Rückhaltevorrichtung (3) entsprechend der standardmäßigen Ansteuerinformation ausgebildet ist.

5. Kraftfahrzeug nach einem der vorangehenden Ansprüche,
**dadurch gekennzeichnet,**
**dass** die erste Kollisionsinformation (K1) die voraussichtliche Fahrzeugverzögerung bei einer bevorstehenden Kollision des Fahrzeugs (1) mit einem Kollisionsobjekt (10) sowie eine ein Maß für den voraussichtlichen Grad der Deformation des Fahrzeugs (1) bei der bevorstehenden Kollision darstellende Deformationsinformation beinhaltet.

6. Kraftfahrzeug nach einem der vorangehenden Ansprüche,
**dadurch gekennzeichnet,**
**dass** die zweite Kollisionsinformation (K2) die tatsächliche Fahrzeugverzögerung während der Kollision des Fahrzeugs (1) mit dem Kollisionsobjekt (10) sowie eine ein Maß für den tatsächlichen Grad der Deformation des Fahrzeugs (1) während der Kollision darstellenden Deformationsinformation beinhaltet.

7. Kraftfahrzeug nach einem der vorangehenden Ansprüche,
**dadurch gekennzeichnet,**
**dass** die wenigstens eine Recheneinrichtung (9) im Rahmen der Ermittlung der ersten Kollisionsinformation (K1) zur Berücksichtigung wenigstens eines fahrzeugspezifischen und/oder kollisionsobjektspezifischen Parameters ausgebildet ist.

8. Kraftfahrzeug nach Ansprüche,
**dadurch gekennzeichnet,**
**dass** der fahrzeugspezifische und/oder objektspezifische Parameter die Masse des Fahrzeugs (1) und/oder die Steifigkeit des Fahrzeugs (1) und/oder die Geschwindigkeit des Fahrzeugs (1) und/oder die Masse des Kollisionsobjekts (10) und/oder die Steifigkeit des Kollisionsobjekts (10) und/oder die Geschwindigkeit des Kollisionsobjekts (10) und/oder die Relativgeschwindigkeit zwischen Fahrzeug (1) und Kollisionsobjekt (10) und/oder der Abstand zwischen Fahrzeug (1) und Kollisionsobjekt (10) und/oder Beschleunigungs- und/oder Verzögerungswerte des Fahrzeugs (1) und/oder des Kollisionsobjekts (10) ist.

9. Kraftfahrzeug nach einem der vorangehenden Ansprüche,
**dadurch gekennzeichnet,**
**dass** die wenigstens eine Recheneinrichtung (9) im Rahmen der Ermittlung der ersten Kollisionsinformation (K1) zur Berücksichtigung wenigstens eines fahrzeuginsassenspezifischen Parameters ausgebildet ist.

10. Kraftfahrzeug nach einem der vorangehenden Ansprüche,
**dadurch gekennzeichnet,**
**dass** der fahrzeuginsassenspezifischen Parameter die Sitzbelegung eines Fahrzeuginsassen und/oder das Gewicht eines Fahrzeuginsassen und/oder ein ein die Körperform wenigstens eines Fahrzeuginsassen darstellendes Modell ist.

11. Kraftfahrzeug nach einem der vorangehenden Ansprüche,
**dadurch gekennzeichnet,**
**dass** die wenigstens eine Recheneinrichtung (9) zur Kommunikation mit wenigstens einer, insbesondere als Fahrzeugsensorik ausgebildeten, Umgebungserfassungseinrichtung (6) ausgebildet ist und im Rahmen der Ermittlung der ersten Kollisionsinformation (K1) zur Berücksichtigung von von der Umgebungserfassungseinrichtung (6) gelieferten Erfassungsdaten ausgebildet ist.

12. Kraftfahrzeug nach einem der vorangehenden Ansprüche,
**dadurch gekennzeichnet,**
**dass** die Vergleichseinrichtung zum kontinuierlichen oder intermittierenden Vergleichen der ersten Kollisionsinformation (K1) mit der zweiten Kollisionsinformation (K2) und zur Ausgabe eines entsprechenden individuellen Vergleichsergebnisses (CR) für jeden Vergleich ausgebildet ist.

13. Kraftfahrzeug nach einem der vorangehenden Ansprüche,
**dadurch gekennzeichnet,**
**dass** die Rückhaltevorrichtung (3) ein Gurtstraffer (5) und/oder Gurtkraftbegrenzer und/oder Airbag (4) und/oder eine Steifigkeitssteuerung einer Fahrgastzelle und/oder eine adaptive Kopfstütze und/oder eine Vorrichtung zur Einstellung einer Sitzposition eines Sitzes ist.

14. Verfahren zur Ansteuerung wenigstens einer über wenigstens eine Steuereinrichtung ansteuerbaren Rückhaltevorrichtung eines Kraftfahrzeugs, insbesondere des Kraftfahrzeugs nach einem der vorangehenden Ansprüche, wobei
- über wenigstens eine Recheneineinrichtung vor einer Kollision des Fahrzeugs mit einem Kollisionsobjekt wenigstens eine eine bevorstehende Kollision des Fahrzeugs mit einem Kollisionsobjekt betreffende erste Kollisionsinformation und,
- während der Kollision des Fahrzeugs mit dem Kollisionsobjekt eine die tatsächliche Kollision des Fahrzeugs mit dem Kollisionsobjekt betreffende zweite Kollisionsinformation ermittelt und ausgegeben, sowie
- eine Vergleichseinrichtung ein Vergleich der ersten Kollisionsinforrtiation mit der zweiten Kollisionsinformation erfolgt und ein Vergleichsergebnis ausgegeben wird,
wobei
die Steuereinrichtung der wenigstens einen Rückhaltevorrichtung bei einem eine Validierung der wenigstens einen ersten Kollisionsinformation bezüglich der zweiten Kollisionsinformation anzeigenden Vergleichsergebnis wenigstens eine in einer mit der Steuereinrichtung der wenigstens einen Rückhaltevorrichtung kommunizierend verbundenen Speichereinrichtung, in welcher für unterschiedliche Kollisionsvorgänge individuell definierte Ansteuerinformation zum Ansteuern der wenigstens einen Rückhaltevorrichtung hinterlegt sind, hinterlegte Ansteuerinformation auswählt und die wenigstens eine Rückhaltevorrichtung entsprechend der ausgewählten Ansteuerinformation ansteuert,
**dadurch gekennzeichnet, dass** die Steuereinrichtung bei einem keine Validierung der wenigstens einen ersten Kollisionsinformation bezüglich der zweiten Kollisionsin-formation anzeigenden Vergleichsergebnis eine standardmäßige Ansteuerinformation der wenigstens einen Rückhaltevorrichtung auswählt und die wenigstens eine Rückhaltevorrichtung entsprechend der standardmäßigen Ansteuerinformation ansteuert.

15. Verfahren nach Anspruch 14,
**dadurch gekennzeichnet,**
**dass** die Steuereinrichtung der wenigstens einen Rückhaltevorrichtung (3) in Abhängigkeit der ersten Kollisionsinformation eine Vorauswahl einer Ansteuerinformation aus der Speichereinrichtung trifft.

16. Verfahren nach Anspruch 15,
**dadurch gekennzeichnet,**
**dass** die Steuereinrichtung der wenigstens einen Rückhaltevorrichtung (3) in Abhängigkeit des Vergleichsergebnisses gegebenenfalls eine alternative Ansteuerinformation aus der Speichereinrichtung auswählt.

17. Verfahren nach einem der Ansprüche 14 bis 16,
**dadurch gekennzeichnet,**
**dass** die Steuereinrichtung, wenn die wenigstens eine Recheneinrichtung keine erste Kollisionsinformation ausgeben kann, im Falle einer Kollision des Fahrzeugs mit einem Kollisionsobjekt die wenigstens eine Rückhaltevorrichtung (3) entsprechend der standardmäßigen Ansteuerinformation ansteuert.

18. Verfahren nach einem der Ansprüche 14 bis 17,
**dadurch gekennzeichnet,**
**dass** als erste Kollisionsinformation eine Information, welche die voraussichtliche Fahrzeugverzögerung bei einer bevorstehenden Kollision des Fahrzeugs mit einem Kollisionsobjekt sowie eine ein Maß für den voraussichtlichen Grad der Deformation des Fahrzeugs bei der bevorstehenden Kollision darstellende Deformationsinformation beinhaltet, verwendet wird.

19. Verfahren nach einem der Ansprüche 14 bis 18,
**dadurch gekennzeichnet,**
**dass** als zweite Kollisionsinformation eine Information, welche die tatsächliche Fahrzeugverzögerung während der Kollision des Fahrzeugs mit dem Kollisionsobjekt sowie eine ein Maß für den tatsächlichen Grad der Deformation des Fahrzeugs während der Kollision darstellenden Deformationsinformation beinhaltet, verwendet wird.

20. Verfahren nach einem der Ansprüche 14 bis 18,
**dadurch gekennzeichnet,**
**dass** als zweite Kollisionsinformation eine Information, welche die tatsächliche Fahrzeugverzögerung während der Kollision des Fahrzeugs mit dem Kollisionsobjekt sowie eine ein Maß für den tatsächlichen Grad der Deformation des Fahrzeugs während der Kollision darstellenden Deformationsinformation beinhaltet, verwendet wird.

21. Verfahren nach einem der Ansprüche 14 bis 19,
**dadurch gekennzeichnet,**
**dass** die wenigstens eine Recheneinrichtung im Rahmen der Ermittlung der ersten Kollisionsinformation wenigstens einen fahrzeugspezifischen und/oder kollisionsobjektspezifischen Parameter berücksichtigt.

22. Verfahren nach Anspruch 20,
**dadurch gekennzeichnet,**
**dass** als fahrzeugspezifischer und/oder objektspezifischer Parameter die Masse des Fahrzeugs und/oder die Steifigkeit des Fahrzeugs und/oder die Geschwindigkeit des Fahrzeugs und/oder die Masse des Kollisionsobjekts und/oder die Steifigkeit des Kollisionsobjekts und/oder die Geschwindigkeit des Kollisionsobjekts und/oder die Relativgeschwindigkeit zwischen Fahrzeug und Kollisionsobjekt und/oder der Abstand zwischen Fahrzeug und Kollisionsobjekt und/oder Beschleunigungs- und/oder Verzögerungswerte des Fahrzeugs und/oder des Kollisionsobjekts verwendet wird.

23. Verfahren nach einem der Ansprüche 14 bis 21,
**dadurch gekennzeichnet,**
**dass** die wenigstens eine Recheneinrichtung im Rahmen der Ermittlung der ersten Kollisionsinformation wenigstens einen fahrzeuginsassenspezifischen Parameter berücksichtigt.

24. Verfahren nach Anspruch 22,
**dadurch gekennzeichnet,**
**dass** als fahrzeuginsassenspezifischen Parameter die Sitzbelegung eines Fahrzeuginsassen und/oder das Gewicht eines Fahrzeuginsassen und/oder ein ein die Körperform wenigstens eines Fahrzeuginsassen darstellendes Modell verwendet wird.

25. Verfahren nach einem der Ansprüche 14 bis 23,
**dadurch gekennzeichnet,**
**dass** die wenigstens eine Recheneinrichtung mit wenigstens einer, insbesondere als Fahrzeugsensorik ausgebildeten, Umgebungserfassungseinrichtung kommuniziert und im Rahmen der Ermittlung der ersten Kollisionsinformation die von der Umgebungserfassungseinrichtung gelieferten Erfassungsdaten berücksichtigt.

26. Verfahren nach einem der Ansprüche 14 bis 24,
**dadurch gekennzeichnet,**
**dass** die Vergleichseinrichtung die wenigstens eine erste Kollisionsinformation mit der zweiten Kollisionsinformation kontinuierlich oder intermittierend vergleicht und für jeden Vergleich eine entsprechendes individuelles Vergleichsergebnis ausgibt.

## Claims

1. Motor vehicle (1) comprising
- at least one restraint system (3) that can be controlled by means of at least one control device (2),
- at least one computing device (9) which
- is configured to determine and output, before a collision of the vehicle (1) with a collision object (10), at least one first collision information (K1) relating to an impending collision of the vehicle (1) with a collision object (10), and
- is configured to determine and output, during the collision of the vehicle (1) with a collision object (10), second collision information (K2) relating to the actual collision of the vehicle (1) with the collision object (10), and
- a comparison device (12) which is configured to compare the first collision information (K1) with the second collision information (K2) and to output a comparison result,
wherein
the control device (2) of the at least one restraint system (3) is configured, in the case of a comparison result (CR) that indicates a validation of the at least one first collision information (K1) relative to the second collision information (K2), to select at least one control information (I1, I2) stored in a storage device (13) connected for communication with the control device (2) of the at least one restraint system (3), in which control information (I1, 12) individually defined for different collision processes is stored for the purpose of controlling the at least one restraint system (3), and to control the at least one restraint system (3) commensurate with the control information (11, I2) selected, **characterised in that**, in the case of a comparison result (CR) that does not indicate a validation of the at least one first collision information (K1) relative to the second collision information (K2), the control device is configured to select a standard control information for the at least one restraint device (3) and to control the at least one restraint system (3) commensurate with the standard control information.

2. Motor vehicle according to claim 1, **characterised in that** the control device (2) of the at least one restraint system (3) is configured to preselect a control information (I1, I2) from the storage device (13) in accordance with the first collision information (K1).

3. Motor vehicle according to claim 2, **characterised in that** the control device (2) of the at least one restraint system (3) is configured to select an alternative control information (I1, I2) from the storage device (13) in accordance with the comparison result (CR).

4. Motor vehicle according to one of the preceding claims, **characterised in that** if the at least one computing device (9) cannot supply a first collision information (K1), in the event of a collision of the vehicle (1) with a collision object (10), the control device is configured to control the at least one restraint system (3) in accordance with the standard control information.

5. Motor vehicle according to one of the preceding claims, **characterised in that** the first collision information (K1) comprises the anticipated vehicle deceleration in the event of an impending collision of the vehicle (1) with a collision object (10) and deformation information representing a measure for the anticipated degree of deformation of the vehicle (1) during the impending collision.

6. Motor vehicle according to one of the preceding claims, **characterised in that** the second collision information (K2) comprises the actual vehicle deceleration during the collision of the vehicle (1) with the collision object (10) and deformation information representing a measure for the actual degree of deformation of the vehicle (1) during the collision.

7. Motor vehicle according to one of the preceding claims, **characterised in that** the at least one computing device (9) is configured to take account of at least one vehicle-specific and/or collision object-specific parameter within the scope of determining the first collision information (K1).

8. Motor vehicle according to claims, **characterised in that** the vehicle-specific and/or object-specific parameter is the mass of the vehicle (1) and/or the rigidity of the vehicle (1) and/or the speed of the vehicle (1) and/or the mass of the collision object (10) and/or the rigidity of the collision object (10) and/or the speed of the collision object (10) and/or the relative speed between the vehicle (1) and the collision object (10) and/or the distance between the vehicle (1) and the collision object (10) and/or the acceleration and/or deceleration values of the vehicle (1) and/or the collision object (10).

9. Motor vehicle according to one of the preceding claims, **characterised in that** the at least one computing device (9) is configured to take account of at least one vehicle-occupant-specific parameter within the scope of determining the first collision information (K1).

10. Motor vehicle according to one of the preceding claims, **characterised in that** the vehicle-occupant-specific parameter is the seat occupation of a vehicle occupant and/or the weight of a vehicle occupant and/or a model representing the body shape of at least one vehide occupant.

11. Motor vehicle according to one of the preceding claims, **characterised in that** the at least one computing device (9) is configured to communicate with at least one environment detecting device (6) configured, in particular, as a vehicle sensor system, and is configured to take account of detection data supplied by the environment detecting device (6) within the scope of determining the first collision information (K1).

12. Motor vehicle according to one of the preceding claims, **characterised in that** the comparison device is configured to continuously or intermittently compare the first collision information (K1) with the second collision information (K2) and to output a corresponding individual comparison result (CR) for each comparison.

13. Motor vehicle according to one of the preceding claims, **characterised in that** the restraint system (3) is a seat belt tensioner (5) and/or seat belt force limiter and/or airbag (4) and/or a rigidity control for a passenger compartment and/or an adaptive headrest and/or a device for adjusting a seat position of a seat.

14. Method for controlling at least one restraint system of a motor vehicle that can be controlled by means of at least one control device, particularly of the motor vehicle according to one of the preceding claims, wherein
- by means of at least one computing device, before a collision of the vehicle with a collision object, at least one first information relating to an impending collision of the vehicle with a collision object and
- during the collision of the vehicle with the collision object, a second collision information relating to the actual collision of the vehicle with the collision object is determined and output,
wherein
the control device of the at least one restraint system, in the case of a comparison result that indicates a validation of the at least one first collision information relative to the second collision information, selects at least one control information stored in a storage device connected for communication with the control device of the at least one restraint system, in which control information individually defined for different collision processes is stored for the purpose of controlling the at least one restraint system, and controls the at least one restraint system in accordance with the control information selected, **characterised in that**, in the case of a comparison result that does not indicate a validation of the at least one first collision information relative to the second collision information, the control device selects a standard control information for the at least one restraint device and controls the at least one restraint system corresponding to the standard control information.

15. Method according to claim 14, **characterised in that** the control device of the at least one restraint system (3) makes a pre-selection of a control information from the storage device as a function of the first collision information.

16. Method according to claim 15, **characterised in that** the control device of the at least one restraint system (3) if necessary selects an alternative control information from the storage device, as a function of the comparison result.

17. Method according to one of claims 14 to 16, **characterised in that**, if the at least one computing device cannot output any first collision information, in the event of a collision of the vehicle with a collision object, the control device controls the at least one restraint system (3) in accordance with the standard control information.

18. Method according to one of claims 14 to 17, **characterised in that** information that comprises the anticipated deceleration of the vehicle in an impending collision of the vehicle with a collision object and deformation information that represents a measure for the anticipated degree of deformation of the vehicle in the impending collision is used as the first collision information.

19. Method according to one of claims 14 to 18, **characterised in that** information that comprises the actual deceleration of the vehicle during the collision of the vehicle with the collision object and deformation information that represents a measure for the actual degree of deformation of the vehicle during the collision is used as the second collision information.

20. Method according to one of claims 14 to 18, **characterised in that** information that comprises the actual deceleration of the vehicle during the collision of the vehicle with the collision object and deformation information that represents a measure for the actual degree of deformation of the vehicle during the collision is used as the second collision information.

21. Method according to one of claims 14 to 19, **characterised in that** within the scope of determining the first collision information the at least one computing device takes into account at least one vehicle-specific and/or collision object-specific parameter.

22. Method according to claim 20, **characterised in that** the mass of the vehicle and/or the rigidity of the vehicle and/or the speed of the vehicle and/or the mass of the collision object and/or the rigidity of the collision object and/or the speed of the collision object and/or the relative speed between the vehicle and the collision object and/or the distance between the vehicle and the collision object and/or the acceleration and/or deceleration values of the vehicle and/or the collision object is or are used as the vehicle-specific and/or collision object-specific parameter.

23. Method according to one of claims 14 to 21, **characterised in that** the at least one computing device takes account of at least one vehicle-occupant-specific parameter within the scope of determining the first collision information item.

24. Method according to claim 22, **characterised in that** the seat occupation of a vehicle occupant and/or the weight of a vehicle occupant and/or a model representing the body shape of at least one vehicle occupant is used as the vehicle occupant-specific parameter.

25. Method according to one of claims 14 to 23, **characterised in that** the at least one computing device communicates with at least one environment detecting device configured, in particular, as a vehicle sensory system, and takes account of detection data supplied by the environment detecting device within the scope of determining the first collision information.

26. Method according to one of claims 14 to 24, **characterised in that** the comparison device continuously or intermittently compares the at least one first collision information with the second collision information and outputs a corresponding individual comparison result (CR) for each comparison.

## Revendications

1. Véhicule automobile (1), comprenant
- au moins un dispositif de retenue (3) pouvant être commandé par l'intermédiaire au moins d'un système de commande (2),
- au moins un système de calcul (9),
- qui est réalisé pour, avant une collision du véhicule (1) avec un objet de collision (10), déterminer et délivrer au moins une première information concernant une collision imminente du véhicule (1) avec un objet de collision (10), et
- qui est réalisé pour, lors de la collision du véhicule (1) avec l'objet de collision (10), déterminer et délivrer une deuxième information concernant la collision effective du véhicule (1) avec l'objet de collision (10),
et
- un système de comparaison (12), qui est réalisé pour comparer la première information relative à la collision (K1) et la deuxième information relative à la collision (K2) et pour délivrer un résultat de comparaison,
où le système de commande (2) du dispositif de retenue (3) au moins au nombre de un est réalisé pour, dans le cas d'un résultat de comparaison (CR) indiquant une validation de la première une information de collision (Kl) au moins au nombre de une par rapport à la deuxième information relative à la collision (K2), sélectionner au moins une information de commande (I1, 12) mémorisée dans un système de mémoire (13) relié de manière à communiquer avec le système de commande (2) du dispositif de retenue (3) au moins au nombre de un, dans lequel système de mémoire sont mémorisées, pour divers événements de collision, des informations de commande (I1, 12) individuellement définies servant à commander le dispositif de retenue (3) au moins au nombre de un, et pour commander conformément à l'information de commande (I1, 12) sélectionnée le dispositif de retenue (3) au moins au nombre de un, **caractérisé en ce que** le système de commande est réalisé pour, en présence d'un résultat de comparaison (CR) n'indiquant par de validation de la première information relative à la collision (K1) au moins au nombre de une par rapport à la deuxième information relative à la collision (K2), sélectionner une information de commande standard du dispositif de retenue (3) au moins au nombre de un et commander conformément à l'information de commande standard le dispositif de retenue (3) au moins au nombre de un.

2. Véhicule automobile selon la revendication 1,
**caractérisé en ce**
**que** le système de commande (2) du dispositif de retenue (3) au moins au nombre de un est réalisé pour, en fonction de la première information relative à la collision (K1), présélectionner une information de commande (I1, 12) dans le système de mémoire (13).

3. Véhicule automobile selon la revendication 2,
**caractérisé en ce**
**que** le système de commande (2) du dispositif de retenue (3) au moins au nombre de un est réalisé pour, en fonction du résultat de comparaison (CR), éventuellement sélectionner à nouveau une autre information de commande (I1, 12) alternative dans le système de mémoire (13).

4. Véhicule automobile selon l'une quelconque des revendications précédentes,
**caractérisé en ce**
**que** le système de commande, lorsque le système de calcul (9) au moins au nombre de un ne peut délivrer aucune première information relative à la collision (K1), est réalisé pour, en cas de collision du véhicule (1) avec un objet de collision (10), commander le dispositif de retenue (3) au moins au nombre de un conformément à l'information de commande standard.

5. Véhicule automobile selon l'une quelconque des revendications précédentes,
**caractérisé en ce**
**que** la première information relative à la collision (k1) englobe la décélération prévisible du véhicule dans le cas d'une collision imminente du véhicule (1) avec un objet de collision (10) ainsi qu'une information relative à la déformation représentant une mesure pour le degré prévisible de la déformation subie par le véhicule (1) dans le cas de la collision imminente.

6. Véhicule automobile selon l'une quelconque des revendications précédentes,
**caractérisé en ce**
**que** la deuxième information relative à la collision (K2) englobe la décélération réelle du véhicule lors de la collision du véhicule (1) avec l'objet de collision (10) ainsi qu'une information relative à la déformation représentant le degré réel de la déformation subie par le véhicule (1) lors de la collision.

7. Véhicule automobile selon l'une quelconque des revendications précédentes,
**caractérisé en ce**
**que** le système de calcul (9) au moins au nombre de un est réalisé, dans le cadre de la détermination de la première information relative à la collision (K1), pour tenir compte au moins d'un paramètre spécifique au véhicule et/ou spécifique à l'objet de collision.

8. Véhicule automobile selon des revendications,
**caractérisé en ce**
**que** le paramètre spécifique au véhicule et/ou spécifique à l'objet est le poids du véhicule (1) et/ou la rigidité du véhicule (1) et/ou la vitesse du véhicule (1) et/ou le poids de l'objet de collision (10) et/ou la rigidité de l'objet de collision (10) et/ou la vitesse de l'objet de collision (10) et/ou la vitesse relative entre le véhicule (1) et l'objet de collision (10) et/ou la distance entre le véhicule (1) et l'objet de collision (10) et/ou des valeurs d'accélération et/ou de décélération du véhicule (1) et/ou de l'objet de collision (10).

9. Véhicule automobile selon l'une quelconque des revendications précédentes,
**caractérisé en ce**
**que** le système de calcul (9) au moins au nombre de un est réalisé, dans le cadre de la détermination de la première information relative à la collision (K1), pour tenir compte au moins d'un paramètre spécifique aux passagers du véhicule.

10. Véhicule automobile selon l'une quelconque des revendications précédentes,
**caractérisé en ce**
**que** le paramètre spécifique aux passagers du véhicule est l'occupation de siège par un passager du véhicule et/ou le poids d'un passager du véhicule et/ou un modèle représentant la forme corporelle d'au moins un passager du véhicule.

11. Véhicule automobile selon l'une quelconque des revendications précédentes,
**caractérisé en ce**
**que** le système de calcul (9) au moins au nombre de un est réalisé aux fins de la communication avec au moins un système de détection de l'environnement (6) réalisé en particulier sous la forme d'un système de capteur du véhicule, et est réalisé pour, dans le cadre de la détermination de la première information relative à la collision (K1), tenir compte des données de détection fournies par le système de détection de l'environnement (6).

12. Véhicule automobile selon l'une quelconque des revendications précédentes,
**caractérisé en ce**
**que** le système de comparaison est réalisé pour la comparaison continue ou intermittente de la première information relative à la collision (K1) à la deuxième information relative à la collision (K2) et pour délivrer un résultat de comparaison (CR) correspondant propre à chaque comparaison.

13. Véhicule automobile selon l'une quelconque des revendications précédentes,
**caractérisé en ce**
**que** le dispositif de retenue (3) est une ceinture de sécurité (5) et/ou un limitateur de force de ceinture et/ou un airbag (4) et/ou une commande de raideur d'un habitacle et/ou un appuie-tête adaptatif et/ou un dispositif de réglage d'une position de siège d'un siège.

14. Procédé servant à commander au moins un dispositif de retenue pouvant être commandé par l'intermédiaire au moins d'un système de commande, d'un véhicule automobile, en particulier du véhicule automobile selon l'une quelconque des revendications précédentes, où
- au moins une première information concernant une collision imminente du véhicule avec un objet de collision est déterminée et délivrée par l'intermédiaire au moins d'un système de calcul avant une collision du véhicule avec un objet de collision,
- une deuxième information concernant la collision réelle du véhicule avec l'objet de collision est déterminée et délivrée lors de la collision du véhicule avec l'objet de collision, et
- une comparaison entre la première information relative à la collision et la deuxième information relative à la collision est effectuée par un système de comparaison, un résultat de comparaison étant délivré, où le système de commande du dispositif de retenue au moins au nombre de une sélectionne, en présence d'un résultat de comparaison indiquant une validation de la première information au moins au nombre de une relative à la collision par rapport à la deuxième information relative à la collision, au moins une information de commande mémorisée dans un système de mémoire relié de manière à communiquer avec le système de commande du dispositif de retenue au moins au nombre de un, dans lequel système de mémoire sont mémorisées, pour divers événements de collision, des informations de commande individuellement définies servant à commander le dispositif de retenue au moins au nombre de un, et commande conformément à l'information de commande sélectionnée le dispositif de retenue au moins au nombre de un, **caractérisé en ce que** le système de commande sélectionne, en présence d'un résultat de comparaison n'indiquant pas de validation de la une première information au moins au nombre de une relative à la collision par rapport à la deuxième information relative à la collision, une information de commande standard du dispositif de retenue au moins au nombre de un et commande conformément à l'information de commande standard le dispositif de retenue au moins au nombre de un.

15. Procédé selon la revendication 14,
**caractérisé en ce**
**que** le système de commande du dispositif de retenue (3) au moins au nombre de un effectue une sélection préalable d'une information de commande dans le système de mémoire en fonction de la première information relative à la collision.

16. Procédé selon la revendication 15,
**caractérisé en ce**
**que** le système de commande du dispositif de retenue (3) au moins au nombre de un sélectionne éventuellement une information de commande alternative dans le système de mémoire en fonction du résultat de comparaison.

17. Procédé selon l'une quelconque des revendications 14 à 16,
**caractérisé en ce**
**que** le système de commande, lorsque le système de calcul au moins au nombre de un ne peut pas délivrer une première information relative à la collision, commande, dans le cas d'une collision du véhicule avec un objet de collision, le dispositif de retenue (3) au moins au nombre de un conformément à l'information de commande standard.

18. Procédé selon l'une quelconque des revendications 14 à 17,
**caractérisé en ce**
**qu'**on utilise, comme première information relative à la collision, une information qui englobe la décélération prévisible du véhicule dans le cas d'une collision imminente du véhicule avec un objet de collision ainsi qu'une information relative à la déformation représentant une mesure pour le degré prévisible de la déformation subie par le véhicule dans le cas de la collision imminente.

19. Procédé selon l'une quelconque des revendications 14 à 18,
**caractérisé en ce**
**qu'**on utilise, comme deuxième information relative à la collision, une information qui englobe la décélération réelle du véhicule lors de la collision du véhicule avec l'objet de collision, ainsi qu'une information relative à la déformation représentant une mesure pour le degré réel de la déformation subie par le véhicule.

20. Procédé selon l'une quelconque des revendications 14 à 18,
**caractérisé en ce**
**qu'**on utilise, comme deuxième information relative à la collision, une information qui englobe la décélération réelle du véhicule lors de la collision du véhicule avec l'objet de collision ainsi qu'une information relative à la déformation représentant une mesure pour le degré réel de la déformation subie par le véhicule lors de la collision.

21. Procédé selon l'une quelconque des revendications 14 à 19,
**caractérisé en ce**
**que** le système de calcul au moins au nombre de un tient compte, dans le cadre de la détermination de la première information relative à la collision, d'au moins un paramètre spécifique au véhicule et/ou spécifique à l'objet de collision.

22. Procédé selon la revendication 20,
**caractérisé en ce**
**qu'**on utilise, comme paramètre spécifique au véhicule et/ou spécifique à l'objet de collision, le poids du véhicule et/ou la raideur du véhicule et/ou la vitesse du véhicule et/ou le poids de l'objet de collision et/ou la raideur de l'objet de collision et/ou la vitesse de l'objet de collision et/ou la vitesse relative entre le véhicule et l'objet de collision et/ou la distance entre le véhicule et l'objet de collision et/ou les valeurs d'accélération et/ou de décélération du véhicule et/ou de l'objet de collision.

23. Procédé selon l'une quelconque des revendications 14 à 21,
**caractérisé en ce**
**que** le système de calcul au moins au nombre de un tient compte, dans le cadre de la détermination de la première information relative à la collision, d'au moins un paramètre spécifique aux passagers du véhicule.

24. Procédé selon la revendication 22,
**caractérisé en ce**
**qu'**on utilise, comme paramètre spécifique aux passagers du véhicule, l'occupation de siège par un passager du véhicule et/ou le poids d'un passager du véhicule et/ou un modèle représentant la forme corporelle d'au moins un passager du véhicule.

25. Procédé selon l'une quelconque des revendications 14 à 23,
**caractérisé en ce**
**que** le système de calcul au moins au nombre de un communique avec au moins un système de détection de l'environnement réalisé en particulier sous la forme d'un système de capteur de véhicule et tient compte, dans le cadre de la détermination de la première information relative à la collision, des données de détection fournies par le système de détection de l'environnement.

26. Procédé selon l'une quelconque des revendications 14 à 24,
**caractérisé en ce**
**que** le système de comparaison compare en continu ou par intermittence la première information au moins au nombre de une relative à la collision à la deuxième information relative à la collision et délivre un résultat de comparaison correspondant propre à chaque comparaison.
